(19) Europäisches Patentamt
European Patent Office
Office européen des brevets

(11) **EP 3 078 517 A1**

(12) **EUROPÄISCHE PATENTANMELDUNG**

(43) Veröffentlichungstag:
**12.10.2016 Patentblatt 2016/41**

(51) Int Cl.:
**B60G 17/019** (2006.01)　　**B60G 17/018** (2006.01)

(21) Anmeldenummer: **16163907.5**

(22) Anmeldetag: **05.04.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **09.04.2015 DE 102015206369**

(71) Anmelder: **Deere & Company**
**Moline, IL 61265 (US)**

(72) Erfinder:
• **Traut, Sebastian**
**67663 Kaiserslautern (DE)**
• **Meid, Michael**
**68753 Waghäusel (DE)**
• **Wolf, Günther**
**67549 Worms (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **SYSTEM ZUR ACHSLASTBESTIMMUNG FÜR EINEN LANDWIRTSCHAFTLICHEN TRAKTOR**

(57)　System (10) zur Achslastbestimmung für einen landwirtschaftlichen Traktor (20), mit einer an einer Vorderachse (14) des landwirtschaftlichen Traktors (20) angeordneten Achs- und/oder Radfedereinrichtung (26), die ein hydraulisches Federbein (28) mit einem Hydraulikzylinder (30) sowie einen den Hydraulikzylinder (30) in einen Ringraum (32) sowie einen Kolbenraum (34) unterteilenden Hydraulikkolben (36) aufweist, wobei ein erster Drucksensor (38) zur Erfassung eines in dem Ringraum (32) vorliegenden ersten Arbeitsdrucks sowie ein zweiter Drucksensor (40) zur Erfassung eines in dem Kolbenraum (34) vorliegenden zweiten Arbeitsdrucks vorgesehen ist. Hierbei berechnet eine Steuereinrichtung (42) auf Basis einer aus dem ersten und zweiten Arbeitsdruck abgeleiteten Druckkraftdifferenz eine Vorderachslastgröße, die eine auf die Vorderachse (14) wirkende Achslast repräsentiert.

WARNUNG, KRITISCHE UEBERLASTUNG DER VORDERACHSE

WARNUNG, KRITISCHE ENTLASTUNG DER VORDERACHSE

GESAMTGEWICHT: 123 t

FIG. 1

EP 3 078 517 A1

**Beschreibung**

Die Erfindung betrifft ein System zur Achslastbestimmung für einen landwirtschaftlichen Traktor.

Landwirtschaftliche Traktoren werden zunehmend mit gefederten Vorderachsen ausgerüstet. So bietet John Deere unter der Bezeichnung "TLS" (Triple Link Suspension) eine hydraulisch gefederte Pendelachse an, die über einen Längslenker schwenkbar an einem Chassis des landwirtschaftlichen Traktors aufgehängt ist und sich mittels zweier in Querrichtung gegenüberliegender hydraulischer Federbeine an dem Chassis des landwirtschaftlichen Traktors abstützt. Jedes der beiden hydraulischen Federbeine weist einen Hydraulikzylinder sowie einen den Hydraulikzylinder in einen Ringraum sowie einen Kolbenraum unterteilenden Hydraulikkolben auf. Eine mit den hydraulischen Federbeinen verbundene Hydrauliksteuerung ermöglicht es, das Niveau des Chassis des landwirtschaftlichen Traktors gegenüber dem Erdboden durch entsprechende Druckbeaufschlagung der Kolbenräume zu regulieren. Zugleich dienen mehrere mit den hydraulischen Federbeinen kommunizierende Membranspeicher der Verwirklichung einer Federfunktion, wobei sich die Federsteifigkeit der hydraulischen Federbeine seitens der Hydrauliksteuerung durch entsprechende Druckbeaufschlagung der Ringräume verändern lässt. Der Umfang der Druckbeaufschlagung wird hierbei mittels eines mit den Ringräumen kommunizierenden Drucksensors überwacht.

Die sich infolge der hydraulischen Niveau- bzw. Federsteifigkeitsregelung ändernden Druckverhältnisse erschweren hierbei eine Beurteilung der auf die Vorderachse wirkenden Achslast mittels des Drucksensors. Deren genaue Kenntnis ist jedoch für die Zwecke einer adaptiven Fahrwerkssteuerung oder zum automatisierten Betreiben einer zentralen Reifenfülldruckanlage des landwirtschaftlichen Traktors erforderlich.

Es ist daher Aufgabe der vorliegenden Erfindung, ein an die Verwendung mit einer hydraulischen Niveau- bzw. Federsteifigkeitsregelung angepasstes System zur Achslastbestimmung für einen landwirtschaftlichen Traktor anzugeben.

Diese Aufgabe wird durch ein System mit den Merkmalen des Patentanspruchs 1 gelöst.

Das System zur Achslastbestimmung für einen landwirtschaftlichen Traktor umfasst eine an einer Vorderachse des landwirtschaftlichen Traktors angeordnete Achs- und/oder Radfedereinrichtung, die ein hydraulisches Federbein mit einem Hydraulikzylinder sowie einen den Hydraulikzylinder in einen Ringraum sowie einen Kolbenraum unterteilenden Hydraulikkolben aufweist, wobei ein erster Drucksensor zur Erfassung eines in dem Ringraum vorliegenden ersten Arbeitsdrucks sowie ein zweiter Drucksensor zur Erfassung eines in dem Kolbenraum vorliegenden zweiten Arbeitsdrucks vorgesehen ist. Hierbei berechnet eine Steuereinrichtung auf Basis einer aus dem ersten und zweiten Arbeitsdruck abgeleiteten Druckkraftdifferenz eine Vorderachslastgröße, die eine auf die Vorderachse wirkende Achslast repräsentiert.

Da eine Änderung des ersten Arbeitsdrucks im Ringraum durch Verschiebung des Hydraulikkolbens innerhalb des Hydraulikzylinders gleichgewichtsbedingt zu einer gleichartigen Änderung des zweiten Arbeitsdrucks im Kolbenraum führt, lassen sich aufgrund der durchgeführten Differenzbildung Einflüsse seitens einer hydraulischen Niveauregelung von vornherein ausschließen.

Die solchermaßen berechnete Vorderachslastgröße kann sowohl Informationen hinsichtlich der statischen Achslast als auch bezüglich ihres dynamischen Verhaltens liefern, wobei sich die Vorderachslastgröße in letzterem Fall als Regelgröße zur Steuerung eines adaptiven Fahrwerks heranziehen lässt, so zum Beispiel zur Erfassung und aktiven Bedämpfung betriebsbedingt auftretender Nickschwingungen des Chassis des landwirtschaftlichen Traktors gegenüber dem Erdboden. Informationen hinsichtlich der statischen Achslast sind hingegen zur automatisierten Steuerung einer zentralen Reifenfülldruckanlage des landwirtschaftlichen Traktors nutzbar. Diese erlauben es, eine lastkompensierte Einstellung der Reifenaufstandsfläche an der Vorderachse durch entsprechende Anpassung des Fülldrucks der Vorderreifen vorzunehmen.

Vorteilhafte Ausführungen der erfindungsgemäßen Vorrichtung gehen aus den Unteransprüchen hervor.

Vorzugsweise ist die Vorderachse über einen Längslenker schwenkbar an dem Chassis des landwirtschaftlichen Traktors aufgehängt, wobei die Steuereinrichtung bei der Berechnung der Vorderachslastgröße eine für den Längslenker spezifische Hebellänge berücksichtigt. Bei der Vorderachse kann es sich um eine an einem freien Ende des Längslenkers angeordnete Pendelachse handeln, wobei sich diese mittels zweier in Querrichtung gegenüberliegender hydraulischer Federbeine an dem Chassis des landwirtschaftlichen Traktors abstützt. Die spezifische Hebellänge des Längslenkers ergibt sich hierbei aus dem Abstand zwischen einem Aufhängungspunkt am Chassis des landwirtschaftlichen Traktors und der Achsmitte. Die Berechnung der Vorderachslastgröße erfolgt in einem solchen Falle achsweise, bei Verwendung einer Einzelradaufhängung ist es jedoch auch denkbar, diese radindividuell durchzuführen.

Die berechnete Vorderachslastgröße kann dazu verwendet werden, eine übermäßige Belastung bzw. Entlastung der Vorderachse des landwirtschaftlichen Traktors zu erkennen sowie den Fahrer zu veranlassen, entsprechende Gegenmaßnahmen beispielsweise durch Verringerung der Fahrgeschwindigkeit zu ergreifen. Eine Entlastung der Vorderachse tritt typischerweise aufgrund einer im Heckbereich des landwirtschaftlichen Traktors einwirkenden vertikalen Anhängelast auf, eine Belastung üblicherweise bei Anbringung von Frontanbaugeräten oder Frontgewichten. Dementsprechend besteht die Möglichkeit, dass die Steuereinrichtung die berechnete Vorderachslastgröße mit einem zulässigen Betriebswertbereich vergleicht, wobei die Steuereinrichtung im Falle einer Abweichung von dem zulässigen Betriebswertbereich die Ausgabe einer entsprechenden Fahrerinformation veranlasst. Der zulässige Betriebswertbereich ergibt sich dabei modellabhängig aus den Spezifikationen des jeweiligen landwirtschaftlichen Traktors.

Genauer gesagt kann die Steuereinrichtung zur Ausgabe der Fahrerinformation ein Nutzerinterface ansteuern, mittels dessen ein auf eine übermäßige Belastung und/oder Entlastung der Vorderachse hinweisendes akustisches und/oder optisches Warnsignal, und/oder ein damit korrespondierender Hinweistext ausgebbar ist. Das Nutzerinterface ist im einfachsten Fall als akustischer Signalgeber bzw. als im Bereich einer Steuerkonsole des landwirtschaftlichen Traktors eingebaute Signalleuchte ausgebildet, es kann sich jedoch auch um ein sogenanntes Graphical User Interface (GUI) handeln, das auf einem berührungsempfindlichen Display eine Fülle weiterer Betriebsinformationen des landwirtschaftlichen Traktors anzeigt.

Des Weiteren ist es möglich, dass die Steuereinrichtung ausgehend von einer an einem heckseitigen Hubwerk anhängelastbedingt auftretenden Krafteinwirkung eine Hinterachslastgröße berechnet, die eine auf eine Hinterachse wirkende Achslast repräsentiert. Das heckseitige Hubwerk ist beispielsweise als Dreipunkt-Geräteanbau zur Anbringung eines landwirtschaftlichen Anbaugeräts ausgebildet. Der Dreipunkt-Geräteanbau ist von herkömmlicher Bauart und umfasst zwei in gegenüberliegenden unteren Anlenkpunkten schwenkbar befestigte Unterlenker sowie einen in einem mittigen oberen Anlenkpunkt schwenkbar befestigten Oberlenker, wobei sich die Unterlenker mittels hydraulischer Hubzylinder über zugehörige Hubspindeln anheben bzw. absenken lassen.

Die Berechnung der Hinterachslastgröße erfordert die Kenntnis der Schwerpunktlage der angebrachten Anhängelast sowie ihres Gewichts, mithin Informationen hinsichtlich der am Dreipunkt-Geräteanbau herrschenden Kraft- und/oder Hebelverhältnisse. Die Kraftverhältnisse lassen sich durch Verwendung von Kraftmessbolzen in den Anlenkpunkten der Unterlenker bzw. des Oberlenkers sowie von Drucksensoren zur sensorischen Erfassung eines in den hydraulischen Hubzylindern vorliegenden Arbeitsdrucks abschätzen. Die Hebelverhältnisse sind hingegen aufgrund der vielfältigen Einstellmöglichkeiten des Dreipunkt-Geräteanbaus nicht ohne weiteres ermittelbar, sodass der Berechnung der Hinterachslastgröße insoweit ein die gängigsten Einstellungen abdeckender Erfahrungswert zugrunde gelegt wird.

Die aus der berechneten Hinterachslastgröße ableitbare statische Achslast kann gemeinsam mit derjenigen der Vorderachse zur automatisierten Steuerung einer zentralen Reifenfülldruckanlage des landwirtschaftlichen Traktors herangezogen werden. Dies ermöglicht es, eine lastkompensierte Einstellung der Reifenaufstandsfläche an beiden Achsen des landwirtschaftlichen Traktors durch entsprechende Anpassung des Fülldrucks der Vorder- und Hinterreifen vorzunehmen.

Hierbei besteht die Möglichkeit, dass die Steuereinrichtung in Abhängigkeit der berechneten Vorderachslastgröße in Verbindung mit der berechneten Hinterachslastgröße eine in Längsrichtung des landwirtschaftlichen Traktors orientierte Schwerpunktlage ermittelt. Die ermittelte Schwerpunktlage erlaubt die Erkennung eines zu erwartenden front- oder hecklastigen Fahrverhaltens des landwirtschaftlichen Traktors, wobei der Fahrer über ein zugehöriges Nutzerinterface aufgefordert werden kann, eine Gegenballastierung durch Anbringung eines Front- bzw. Heckgewichts vorzunehmen.

Zusätzlich oder alternativ kann die Steuereinrichtung in Abhängigkeit der berechneten Vorderachslastgröße in Verbindung mit der berechneten Hinterachslastgröße eine Gesamtlastgröße ermitteln, die die aktuelle Gesamtmasse des landwirtschaftlichen Traktors wiedergibt. Diese berücksichtigt neben der Masse des landwirtschaftlichen Traktors gleichermaßen diejenige eines daran angebrachten landwirtschaftlichen Anbaugeräts, Frontgewichts, oder dergleichen.

Die Steuereinrichtung kann in Abhängigkeit der ermittelten Gesamtlastgröße ein Nutzerinterface ansteuern, mittels dessen eine auf die aktuelle Gesamtmasse des landwirtschaftlichen Traktors hinweisende Fahrerinformation ausgebbar ist. Die Ausgabe der Fahrerinformation kann hierbei durch Anzeige der aktuellen Gesamtmasse des landwirtschaftlichen Traktors in einer länderspezifischen Maßeinheit erfolgen. Auch kann eine auf eine Überlast hinweisende akustische und/oder optische Warnung ausgegeben werden, sofern die aktuelle Gesamtmasse einen für den landwirtschaftlichen Traktor zulässigen Wert überschreitet.

Das erfindungsgemäße System wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1 eine beispielhafte Ausführungsform des erfindungsgemäßen Systems zur Achslastbestimmung für einen landwirtschaftlichen Traktor, und

Fig. 2 eine Darstellung, in der der Achslastbestimmung zugrunde gelegte Kraft- und Hebelverhältnisse an einem mit dem erfindungsgemäßen System gemäß Fig. 1 ausgestatteten landwirtschaftlichen Traktor veranschaulicht sind.

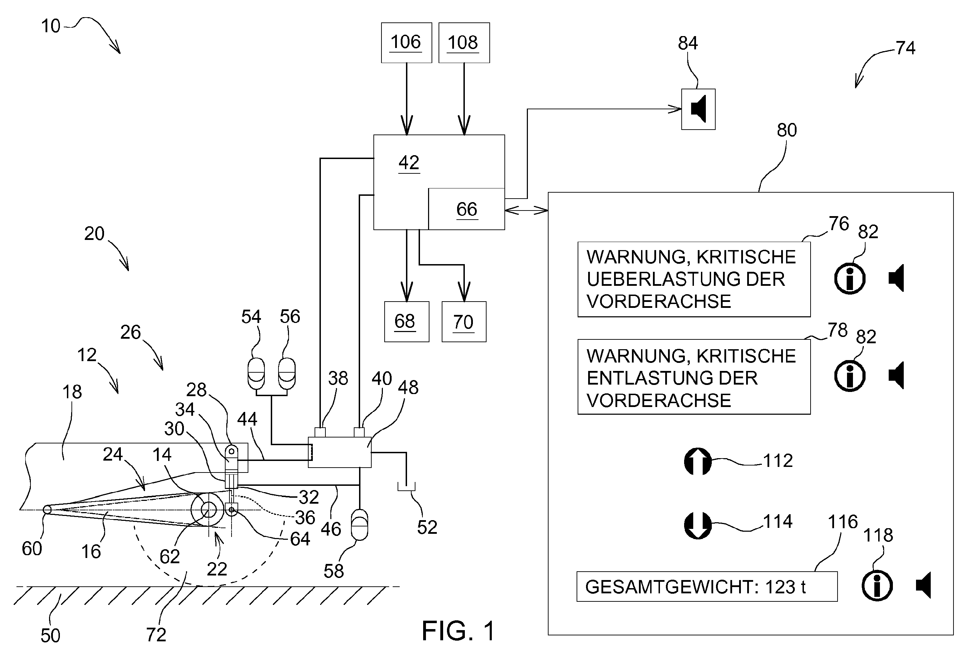

Fig. 1 zeigt eine beispielhafte Ausführungsform des erfindungsgemäßen Systems zur Achslastbestimmung für einen landwirtschaftlichen Traktor.

Das System 10 umfasst eine Achsbaugruppe 12 mit einer Vorderachse 14, die über einen Längslenker 16 schwenkbar an einem Chassis 18 des landwirtschaftlichen Traktors 20 aufgehängt ist. Bei der Vorderachse 14 handelt es sich um eine an einem freien Ende 22 des Längslenkers 16 angeordnete Pendelachse 24, die sich mittels zweier in Querrichtung gegenüberliegender Achs- und/oder Radfedereinrichtungen 26 an dem Chassis 18 des landwirtschaftlichen Traktors 20 abstützt, wobei aus Darstellungsgründen in Fig. 1 lediglich eine der beiden Achs- und/oder Radfedereinrichtungen 26 wiedergegeben ist. Eine solche gefederte Vorderachse wird beispielsweise von John Deere unter der Bezeichnung "TLS" (Triple Link Suspension) angeboten.

Jede der Achs- und/oder Radfedereinrichtungen 26 weist ein hydraulisches Federbein 28 mit einem Hydraulikzylinder 30 sowie einen den Hydraulikzylinder 30 in einen Ringraum 32 sowie einen Kolbenraum 34 unterteilenden Hydraulikkolben 36 auf, wobei ein erster Drucksensor 38 der Erfassung eines in dem Ringraum 32 vorliegenden ersten Arbeitsdrucks $p_1$ und ein zweiter Drucksensor 40 der Erfassung eines in dem Kolbenraum 34 vorliegenden zweiten Arbeitsdrucks $p_2$ dient. Die von den beiden Drucksensoren 38, 40 bereitgestellten Sensorsignale werden einer Steuereinrichtung 42 zur Berechnung einer Vorderachslastgröße $F_V$ zugeführt, die eine auf die Vorderachse 14 wirkende Achslast repräsentiert.

Ringraum 32 und Kolbenraum 34 stehen über zugehörige Hydraulikleitungen 44, 46 mit einer Hydrauliksteuerung 48 des landwirtschaftlichen Traktors 20 in Verbindung. Diese ermöglicht es, das Niveau des Chassis 18 des landwirtschaftlichen Traktors 20 gegenüber der Pendelachse 24 und damit gegenüber dem Erdboden 50 durch entsprechende Druckbeaufschlagung der Kolbenräume 32 zu regulieren. Zugleich dienen mehrere mit den hydraulischen Federbeinen 28 kommunizierende Membranspeicher 54, 56, 58 der Verwirklichung einer Federfunktion, wobei sich die Federsteifigkeit der hydraulischen Federbeine 28 durch entsprechende Druckbeaufschlagung der Ringräume 32 seitens der Hydrauliksteuerung 48 verändern lässt. Der Umfang der Druckbeaufschlagung wird hierbei mittels des mit den Ringräumen 32 kommunizierenden ersten Drucksensors 38 überwacht.

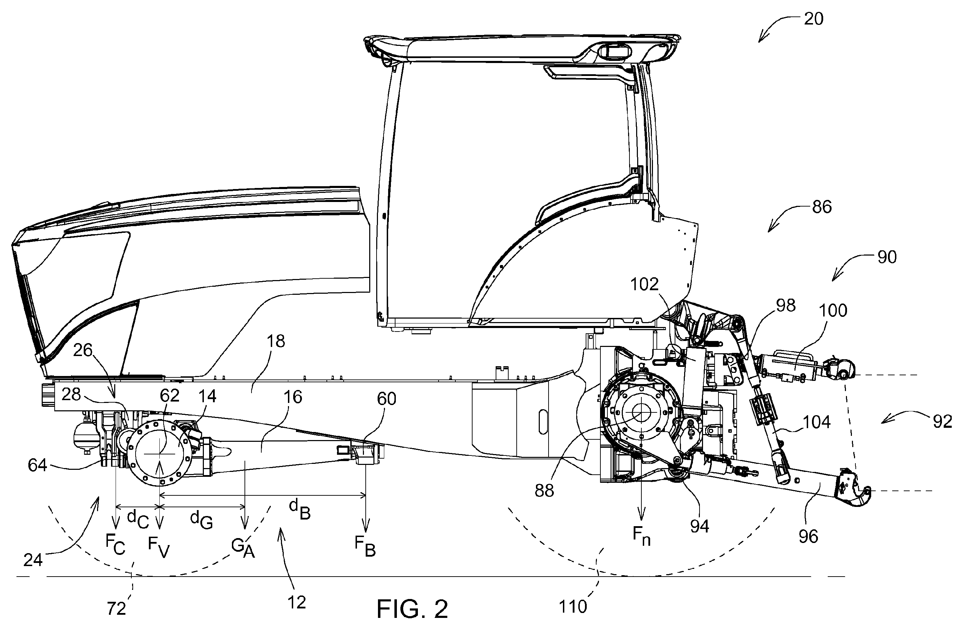

Fig. 2 veranschaulicht die der Achslastbestimmung zugrunde gelegten Kraft- und Hebelverhältnisse.

Die Steuereinrichtung 42 leitet zur Berechnung der Vorderachslastgröße $F_V$ aus dem ersten und zweiten Arbeitsdruck $p_1$, $p_2$ eine Druckkraftdifferenz

$$p_2 \cdot A_2 - p_1 \cdot A_1 = F_C$$

ab, wobei $A_1$ bzw. $A_2$ die druckwirksame Fläche des Hydraulikkolbens 36 im Ringraum 32 bzw. Kolbenraum 34 darstellt. Die so abgeleitete Druckkraftdifferenz $F_C$ bildet unter Berücksichtigung einer für den Längslenker 16 spezifischen Hebellänge $d_B$, die sich aus dem Abstand zwischen einem Aufhängungspunkt 60 des Längslenkers 16 am Chassis 18 des landwirtschaftlichen Traktors 20 und der Achsmitte 62 ergibt, die Grundlage für die Berechnung eines Momentengleichgewichts der Form

$$F_B \cdot d_B = F_C \cdot d_C - G_A \cdot d_G \ .$$

Hierbei repräsentiert $F_B$ die im Aufhängungspunkt 60 des Längslenkers 16 gewichtsbedingt wirkende Lagerkraft, $G_A$ die im Schwerpunkt des Längslenkers 16 angreifende Gewichtskraft der Achsbaugruppe 12, $d_C$ den Abstand zwischen der Achsmitte 62 und einem unteren Abstützpunkt 64 der Achs- und/oder Radfedereinrichtung 26, sowie $d_G$ den Abstand zwischen der Achsmitte 62 und dem Aufhängungspunkt 60 des Längslenkers 16 am Chassis 18 des landwirtschaftlichen Traktors 20. Die Größen $G_A$, $d_C$, $d_G$ sind hierbei als feste Werte in einer der Steuereinrichtung 42 zugeordneten Speichereinheit 66 hinterlegt.

Durch Auflösen nach $F_B$ ergibt sich für die Vorderachslastgröße $F_V$ ein Ausdruck der Form

$$F_V = F_B + F_C + G_A \ .$$

Die solchermaßen berechnete Vorderachslastgröße $F_V$ liefert sowohl Informationen hinsichtlich der statischen Achslast als auch bezüglich ihres dynamischen Verhaltens, wobei die Vorderachslastgröße $F_V$ in letzterem Fall als Regelgröße zur Steuerung eines adaptiven Fahrwerks 68 herangezogen wird, so zum Beispiel zur Erfassung und aktiven Bedämpfung betriebsbedingt auftretender Nickschwingungen des Chassis 18 des landwirtschaftlichen Traktors 20 gegenüber dem Erdboden 50 durch entsprechende Betätigung der Hydrauliksteuerung 48. Informationen hinsichtlich der statischen Achslast werden hingegen zur automatisierten Steuerung einer zentralen Reifenfülldruckanlage 70 des landwirtschaftlichen Traktors 20 genutzt. Diese erlauben es, eine lastkompensierte Einstellung der Reifenaufstandsfläche an der Vorderachse 14 durch entsprechende Anpassung des Fülldrucks der Vorderreifen 72 vorzunehmen.

Zusätzlich oder alternativ wird die berechnete Vorderachslastgröße $F_V$ dazu verwendet, eine übermäßige Belastung bzw. Entlastung der Vorderachse 14 des landwirtschaftlichen Traktors 20 zu erkennen sowie den Fahrer zu veranlassen, entsprechende Gegenmaßnahmen beispielsweise durch Verringerung der Fahrgeschwindigkeit zu ergreifen. Eine Entlastung der Vorderachse 14 tritt typischerweise aufgrund einer im Heckbereich des landwirtschaftlichen Traktors 20 einwirkenden Anhängelast auf, eine Belastung üblicherweise bei Anbringung von Frontanbaugeräten oder Frontgewichten. Dementsprechend vergleicht die Steuereinrichtung 42 die berechnete Vorderachslastgröße $F_V$ mit einem zuläs-

sigen Betriebswertbereich, wobei die Steuereinrichtung 42 im Falle einer Abweichung vom zulässigen Betriebswertbereich die Ausgabe einer entsprechenden Fahrerinformation veranlasst. Der zulässige Betriebswertbereich ergibt sich dabei modellabhängig aus den Spezifikationen des landwirtschaftlichen Traktors 20.

Genauer gesagt steuert die Steuereinrichtung 42 zur Ausgabe der Fahrerinformation ein in einer Fahrerkabine des landwirtschaftlichen Traktors 20 angeordnetes Nutzerinterface 74 an, mittels dessen ein auf eine übermäßige Belastung und/oder Entlastung der Vorderachse 14 hinweisendes akustisches und/oder optisches Warnsignal, und/oder ein damit korrespondierender Hinweistext 76, 78 ausgebbar ist. Bei dem Nutzerinterface 74 handelt es sich beispielsgemäß um ein sogenanntes Graphical User Interface (GUI) 80, das auf einem berührungsempfindlichen Bildschirm eine Vielzahl weiterer Betriebsinformationen des landwirtschaftlichen Traktors 20 anzeigt. Der je nach Vergleichsergebnis ausgegebene Hinweistext 76, 78 lautet im vorliegenden Fall "WARNUNG, KRITISCHE ÜBERLASTUNG DER VORDERACHSE" oder "WARNUNG, KRITISCHE ENTLASTUNG DER VORDERACHSE", verbunden mit der Ausgabe eines optischen Warnsignals in Gestalt eines piktogrammartigen Warnsymbols 82. Zusätzlich erfolgt die Erzeugung eines Warntons durch Ansteuerung eines akustischen Signalgebers 84.

Gemäß einer optionalen Weiterbildung des Systems 10 berechnet die Steuereinrichtung 42 ausgehend von einer an einem heckseitigen Hubwerk 86 anhängelastbedingt auftretenden Krafteinwirkung eine Hinterachslastgröße $F_h$, die eine auf eine Hinterachse 88 des landwirtschaftlichen Traktors 20 wirkende Achslast repräsentiert.

Gemäß Fig. 2 ist das heckseitige Hubwerk 86 als Dreipunkt-Geräteanbau 90 zur Anbringung eines landwirtschaftlichen Anbaugeräts 92 oder dergleichen ausgebildet. Der Dreipunkt-Geräteanbau 90 ist von herkömmlicher Bauart und umfasst zwei in gegenüberliegenden unteren Anlenkpunkten 94 schwenkbar befestigte Unterlenker 96 sowie einen in einem mittigen oberen Anlenkpunkt 98 schwenkbar befestigten Oberlenker 100, wobei sich die Unterlenker 96 mittels hydraulischer Hubzylinder 102 über zugehörige Hubspindeln 104 anheben bzw. absenken lassen. Aus Darstellungsgründen ist in Fig. 2 lediglich einer der beiden Unterlenker 96 wiedergegeben.

Die Berechnung der Hinterachslastgröße $F_h$ erfordert die Kenntnis der Schwerpunktlage der angebrachten Anhängelast sowie ihres Gewichts, mithin Informationen hinsichtlich der am Dreipunkt-Geräteanbau 90 herrschenden Kraft- und/oder Hebelverhältnisse. Beispielsgemäß nimmt die Steuereinrichtung 42 eine Abschätzung der Kraftverhältnisse auf Grundlage von Sensorsignalen vor, die von Kraftmessbolzen 106 in den Anlenkpunkten 94, 98 der Unterlenker 96 bzw. des Oberlenkers 100 sowie von Drucksensoren 108 zur Erfassung eines in den hydraulischen Hubzylindern 102 vorliegenden Arbeitsdrucks bereitgestellt werden (Fig. 1). Die Hebelverhältnisse sind hingegen aufgrund der vielfältigen Einstellmöglichkeiten des Dreipunkt-Geräteanbaus 90 nicht ohne weiteres ermittelbar, sodass der Berechnung der Hinterachslastgröße $F_h$ insoweit ein die gängigsten Einstellungen abdeckender Erfahrungswert zugrunde gelegt wird.

Die aus der berechneten Hinterachslastgröße $F_h$ ableitbare statische Achslast wird gemeinsam mit derjenigen der Vorderachse 14 zur automatisierten Steuerung der zentralen Reifenfülldruckanlage 70 des landwirtschaftlichen Traktors 20 herangezogen. Dies ermöglicht es, eine lastkompensierte Einstellung der Reifenaufstandsfläche an beiden Achsen 14, 88 des landwirtschaftlichen Traktors 20 durch entsprechende Anpassung des Fülldrucks der Vorder- und Hinterreifen 72, 110 vorzunehmen.

Des Weiteren ermittelt die Steuereinrichtung 42 in Abhängigkeit der berechneten Vorderachslastgröße $F_v$ in Verbindung mit der berechneten Hinterachslastgröße $F_h$ eine in Längsrichtung des landwirtschaftlichen Traktors 20 orientierte Schwerpunktlage, und zwar gemäß

$$l_h = \frac{F_v \cdot l}{F_v + F_h} \ ,$$

wobei $l_h$ den Abstand des Schwerpunkts von der Hinterachse 88 und $l$ den Abstand zwischen Vorderachse 14 und Hinterachse 88 bezeichnet (in Fig. 2 der Übersichtlichkeit halber nicht dargestellt).

Die ermittelte Schwerpunktlage erlaubt die Erkennung eines zu erwartenden front- oder hecklastigen Fahrverhaltens des landwirtschaftlichen Traktors 20, wobei der Fahrer über das Nutzerinterface 74 aufgefordert wird, eine Gegenballastierung durch Anbringung entsprechender Front- bzw. Heckgewichte vorzunehmen, was beispielsgemäß durch Anzeige piktogrammartiger Hinweiszeichen 112, 114 auf dem Graphical User Interface 80 erfolgt.

Darüber hinaus ermittelt die Steuereinrichtung 42 in Abhängigkeit der berechneten Vorderachslastgröße $F_v$ in Verbindung mit der berechneten Hinterachslastgröße $F_h$ eine Gesamtlastgröße $F_g$, die die aktuelle Gesamtmasse des landwirtschaftlichen Traktors 20 wiedergibt, wobei die Steuereinrichtung 42 zur Ausgabe einer auf die aktuelle Gesamtmasse des landwirtschaftlichen Traktors 20 hinweisende Fahrerinformation das Nutzerinterface 74 derart ansteuert, dass auf dem Graphical User Interface 80 die aktuelle Gesamtmasse des landwirtschaftlichen Traktors 20 in einer länderspezifischen Maßeinheit als entsprechender Informationstext 116 angezeigt wird. Zusätzlich erfolgt die Ausgabe einer auf eine Überlast hinweisenden akustischen und/oder optischen Warnung, im vorliegenden Fall in Form eines mittels des akustischen Signalgebers 84 erzeugten Warntons und/oder eines auf dem Graphical User Interface 80 angezeigten piktogrammartigen Warnsymbols 118, sofern die aktuelle Gesamtmasse einen für den landwirtschaftlichen Traktor 20 zulässigen Wert überschreitet.

**Patentansprüche**

1.  System zur Achslastbestimmung für einen landwirtschaftlichen Traktor, mit einer an einer Vorderachse (14) des landwirtschaftlichen Traktors (20) angeordneten Achs- und/oder Radfedereinrichtung (26), die ein hydraulisches Federbein (28) mit einem Hydraulikzylinder (30) sowie einen den Hydraulikzylinder (30) in einen Ringraum (32) sowie einen Kolbenraum (34) unterteilenden Hydraulikkolben (36) aufweist, wobei ein erster Drucksensor (38) zur Erfassung eines in dem Ringraum (32) vorliegenden ersten Arbeitsdrucks ($p_1$) vorgesehen ist, **dadurch gekennzeichnet, dass** ein zweiter Drucksensor (40) zur Erfassung eines in dem Kolbenraum (34) vorliegenden zweiten Arbeitsdrucks ($p_2$) vorgesehen ist, wobei eine Steuereinrichtung (42) auf Basis einer aus dem ersten und zweiten Arbeitsdruck ($p_1$, $p_2$) abgeleiteten Druckkraftdifferenz eine Vorderachslastgröße ($F_v$) berechnet, die eine auf die Vorderachse (14) wirkende Achslast repräsentiert.

2.  System nach Anspruch 1, **dadurch gekennzeichnet, dass** die Vorderachse (14) über einen Längslenker (16) schwenkbar aufgehängt ist, wobei die Steuereinrichtung (42) bei der Berechnung der Vorderachslastgröße ($F_v$) eine für den Längslenker (16) spezifische Hebellänge ($d_B$) berücksichtigt.

3.  System nach Anspruch 1 oder 2, **dadurch gekennzeichnet, dass** die Steuereinrichtung (42) die berechnete Vorderachslastgröße ($F_v$) mit einem zulässigen Betriebswertbereich vergleicht, wobei die Steuereinrichtung (42) im Falle einer Abweichung vom zulässigen Betriebswertbereich die Ausgabe einer Fahrerinformation (76, 78, 82) veranlasst.

4.  System nach Anspruch 4, **dadurch gekennzeichnet, dass** die Steuereinrichtung (42) zur Ausgabe der Fahrerinformation ein Nutzerinterface (74) ansteuert, mittels dessen ein auf eine übermäßige Belastung und/oder Entlastung der Vorderachse (14) hinweisendes akustisches und/oder optisches Warnsignal (82), und/oder ein damit korrespondierender Hinweistext (76, 78) ausgebbar ist.

5.  System nach wenigstens einem der Ansprüche 1 bis 4, **dadurch gekennzeichnet, dass** die Steuereinrichtung (42) ausgehend von einer an einem heckseitigen Hubwerk (86) anhängelastbedingt auftretenden Krafteinwirkung eine Hinterachslastgröße ($F_h$) berechnet, die eine auf eine Hinterachse (88) wirkende Achslast repräsentiert.

6.  System nach Anspruch 5, **dadurch gekennzeichnet, dass** die Steuereinrichtung (42) in Abhängigkeit der berechneten Vorderachslastgröße ($F_v$) in Verbindung mit der berechneten Hinterachslastgröße ($F_h$) eine in Längsrichtung des landwirtschaftlichen Traktors (20) orientierte Schwerpunktlage ermittelt.

7.  System nach Anspruch 5 oder 6, **dadurch gekennzeichnet, dass** die Steuereinrichtung (42) in Abhängigkeit der berechneten Vorderachslastgröße ($F_v$) in Verbindung mit der berechneten Hinterachslastgröße ($F_h$) eine Gesamtlastgröße ($F_g$) ermittelt, die die aktuelle Gesamtmasse des landwirtschaftlichen Traktors (20) wiedergibt.

8.  System nach Anspruch 7, **dadurch gekennzeichnet, dass** die Steuereinrichtung (42) in Abhängigkeit der ermittelten Gesamtlastgröße ($F_g$) ein Nutzerinterface (74) ansteuert, mittels dessen eine auf die aktuelle Gesamtmasse des landwirtschaftlichen Traktors (20) hinweisende Fahrerinformation (116, 118) ausgebbar ist.

9.  Landwirtschaftlicher Traktor mit einem System (10) zur Achslastbestimmung nach wenigstens einem der Ansprüche 1 bis 8.

FIG. 1

WARNUNG, KRITISCHE UEBERLASTUNG DER VORDERACHSE

WARNUNG, KRITISCHE ENTLASTUNG DER VORDERACHSE

GESAMTGEWICHT: 123 t

EP 3 078 517 A1

FIG. 2

EP 3 078 517 A1

**Europäisches Patentamt**
**European Patent Office**
**Office européen des brevets**

## EUROPÄISCHER RECHERCHENBERICHT

Nummer der Anmeldung

EP 16 16 3907

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/013917 A1 (AGCO INT GMBH [CH]; PICHLMAIER BENNO [DE]) 31. Januar 2013 (2013-01-31) * Seite 7, Zeile 21 - Seite 8, Zeile 25; Abbildungen 1-2 * * Seite 9, Zeilen 23-30 * * Seite 14, Zeilen 27-32 * ----- | 1-9 | INV. B60G17/019 B60G17/018 |
| X | EP 1 918 136 A1 (DEERE & CO [US]) 7. Mai 2008 (2008-05-07) * Absätze [0023], [0043]; Abbildung 3 * ----- | 1-9 | |
| X | EP 2 269 432 A1 (DEERE & CO [US]) 5. Januar 2011 (2011-01-05) * Absatz [0026]; Abbildungen * ----- | 1-9 | |
| X | DE 10 2005 062246 A1 (HYDAC SYSTEM GMBH [DE]) 5. Juli 2007 (2007-07-05) * Absätze [0019] - [0020]; Abbildungen * ----- | 1-9 | |
| A | EP 1 167 094 A1 (CONTINENTAL AG [DE]) 2. Januar 2002 (2002-01-02) * Absatz [0013]; Abbildungen * ----- | 1-9 | RECHERCHIERTE SACHGEBIETE (IPC) |
| A | DE 10 2005 051964 A1 (GM GLOBAL TECH OPERATIONS INC [US]) 3. Mai 2007 (2007-05-03) * das ganze Dokument * ----- | 1-9 | B60G |

Der vorliegende Recherchenbericht wurde für alle Patentansprüche erstellt

| Recherchenort | Abschlußdatum der Recherche | Prüfer |
|---|---|---|
| Den Haag | 18. August 2016 | Cavallo, Frédéric |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 16 3907

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2016

| Im Recherchenbericht angeführtes Patentdokument | Datum der Veröffentlichung | Mitglied(er) der Patentfamilie | Datum der Veröffentlichung |
|---|---|---|---|
| WO 2013013917 A1 | 31-01-2013 | EP 2734027 A1<br>US 2014343802 A1<br>WO 2013013917 A1 | 28-05-2014<br>20-11-2014<br>31-01-2013 |
| EP 1918136 A1 | 07-05-2008 | DE 102006051894 A1<br>EP 1918136 A1<br>US 2008100017 A1 | 08-05-2008<br>07-05-2008<br>01-05-2008 |
| EP 2269432 A1 | 05-01-2011 | DE 102009027453 A1<br>DK 2269432 T3<br>EP 2269432 A1<br>ES 2421933 T3<br>US 2011004372 A1 | 27-01-2011<br>29-07-2013<br>05-01-2011<br>06-09-2013<br>06-01-2011 |
| DE 102005062246 A1 | 05-07-2007 | AT 484405 T<br>CN 101346248 A<br>DE 102005062246 A1<br>EP 1963118 A2<br>KR 20080083287 A<br>US 2009261541 A1<br>WO 2007073786 A2 | 15-10-2010<br>14-01-2009<br>05-07-2007<br>03-09-2008<br>17-09-2008<br>22-10-2009<br>05-07-2007 |
| EP 1167094 A1 | 02-01-2002 | DE 10029332 A1<br>EP 1167094 A1<br>JP 2002054983 A<br>US 2002038193 A1 | 17-01-2002<br>02-01-2002<br>20-02-2002<br>28-03-2002 |
| DE 102005051964 A1 | 03-05-2007 | KEINE | |

EPO FORM P0461

Für nähere Einzelheiten zu diesem Anhang : siehe Amtsblatt des Europäischen Patentamts, Nr.12/82